# EUROPEAN PATENT APPLICATION

(11) **EP 4 818 515 A1**
(43) Date of publication of application: **07.10.2026**
(21) Application number: 25382312.4
(22) Date of filing: 31.03.2025
(51) Int. Cl.: F03D 1/06, F03D 80/30

(54) **LIGHTNING PROTECTION ASSEMBLY FOR A ROTOR BLADE**

(71) Applicant: Siemens Gamesa Renewable Energy Innovation & Technology S.L., 31621 Sarriguren (Navarra) (ES)
(72) Inventor: Martins Martinho, João, 6200-811 Vales do Rio (PT); March Nomen, Victor, 08195 Sant Cugat del Valles (ES); Goetting, Olaf Lennard, 9000 Aalborg (DK)
(74) Representative: SGRE-Association

(57) **Abstract**

A lightning protection assembly for a rotor blade of a wind turbine is provided. The lightning protection assembly comprises at least a first prefabricated assembly comprising a first conductive element and a first connector element that is in electrical contact with or formed by the first conductive element and a second prefabricated assembly comprising a second conductive element and a connector element that is in electrical contact with or formed by the second conductive element. The first and second prefabricated assemblies are configured to form at least part of a shell of the rotor blade. The lightning protection assembly further comprises an electrical connection between the first connector element and the second connector element.

## Description

### FIELD OF THE INVENTION

The present invention relates to a lightning protection assembly for a rotor blade of a wind turbine. It further relates to a wind turbine rotor blade and a method of producing a lightning protection assembly.

### BACKGROUND

In recent years, rotor blade spans have increased considerably. In order to form the shape of the rotor blade a mold is used. These molds can be rather large due to the size of the rotor blades. The mold is built to match the blade's design, including the root, airfoil, and tip shapes. The process of building up the rotor blade shell involves a technique called lay-up. Fiberglass cloth or mats are laid in the mold in layers, with resin being infused between layers. The number of layers and the orientation of the fibers are carefully chosen to achieve the required strength and flexibility. After the layers of fiber are laid down and vacuum infusion has taken place, the resin is cured.

Rotor blades may be designed to include a lighting protection system, which may include lighting receptors to attract a lightning strike and protect other components of the blade. Conventionally, a bolted connection is used between a lightning receptor and a receptor block embedded within the outer shell of the rotor blade. The receptor block is connected to a down conductor. In conventional systems, to establish the connection between the receptor and the receptor block, part of the outer shell of the wind turbine must be locally removed.

The integration of the lightning protection system during the lay-up process of rotor blade manufacturing requires precise positioning of components, which can be time-consuming. Since the lay-up involves layering materials like fiberglass and carbon fiber planks, the addition of conductive materials for lightning protection demands careful placement to ensure optimal functionality. This precision is crucial to ensure the blade can effectively channel lightning strikes, preventing damage to the blade structure. As a result, this step adds complexity and increases the overall time required for rotor blade production. The time of use of the mold is however expensive, in view of the large size and associated high cost of providing such mold. It is desirable to avoid these negative effects.

### SUMMARY

Accordingly, there is a need to mitigate at least some of the drawbacks mentioned above, in particular to facilitate the manufacturing of a rotor blade of a wind turbine.

This need is met by the features of the independent claims. The dependent claims describe embodiments of the invention.

According to an aspect of the present invention, a lightning protection assembly for a rotor blade of a wind turbine is provided. The lightning protection assembly comprises at least a first prefabricated assembly comprising a first conductive element and a first connector element that is in electrical contact with or formed by the first conductive element, wherein the first conductive element and the first connector element are embedded in a matrix material of the first prefabricated assembly, and a second prefabricated assembly comprising a second conductive element and a connector element that is in electrical contact with or formed by the second conductive element, wherein the second conductive element and the second connector element are embedded in a matrix material of the second prefabricated assembly. The first and second prefabricated assemblies are configured to form at least part of a shell of the rotor blade. The lightning protection assembly further comprises an electrical connection between the first connector element and the second connector element, wherein the electrical connection comprises a conductor that extends through the first and second prefabricated assemblies at least from the first connector element to the second connector element.

Using such a lightning protection assembly for protecting the rotor blade of a wind turbine may provide several advantages. By using such a lightning protection assembly, providing an electrical connection between the first and second prefabricated assembly may be facilitated. As the first and second prefabricated assembly each comprise a connector element, the respective first and second conductive elements may be electrically connected by using the conductor. As the first and second conductive elements are embedded in the matrix material of the respective first and second prefabricated assembly, the lightning protection system can be provided by placing the prefabricated assemblies in the mold, so that conductive elements and other components do no longer need to be individually placed into the mold when the blade shell is manufactured. This may result in a faster production and may simplify the manufacturing process. Additionally, using the large mold required for the blade shell is very expensive. By using the solution, the large mold may be needed for a much shorter time, thus leading to more cost efficient process.

That the connector elements are embedded in the matrix material may mean that they are not exposed to the outside. For example, the connector element may be surrounded by matrix material essentially on all sides (except where it is in contact with another component of the respective prefabricated assembly, e.g. with the conductive element).

The first conductor element may be aligned with the second conductor element so that they are positioned above each other in a insertion direction of the conductor; thereby, the conductor can extend into and contact both connector elements.

That the conductor extends through a connector element does not imply that it fully extends through the conductor element, but it is sufficient if it extends through part of it so that electrical contact is established between the conductor and the connector element.

The conductor may provide an equipotential bonding (via the connector elements) between the conductive elements extending in the different prefabricated assemblies, preferably between conductive elements extending in parallel and/or connected in parallel (e.g. at their ends). Accordingly, potential differences and arcing between these conductive elements may be prevented. It should be clear that further respective equipotential bondings may be provided between the same or towards different conductive elements of other prefabricated assemblies.

A prefabricated assembly may refer to an assembly that has been manufactured prior to establishing the electrical connection. For example, this may mean that the matrix material may have hardened, e.g. may have been cured, prior to establishing the electrical connection between the connector elements via the conductor.

The first and second prefabricated assemblies are configured to form at least part of a shell of the rotor blade. For example, the at least first and second prefabricated assemblies may be integrated into the shell of a rotor blade, or at least one of the first and second prefabricated assemblies may form at least a part of the shell of the rotor blade, such as a half shell. The other of the first and second prefabricated assemblies may for example be integrated into the shell part, e.g. into the half shell, or may itself form a shell part that is, e.g., stacked or mounted onto the other shell part, e.g. to form a full shell. It is also conceivable that at least one of the first and second prefabricated assemblies may form a full shell, into which at least the other prefabricated assembly is integrated. Optionally, one or more other prefabricated assemblies and/or other components may be integrated into the shell, e.g. into the first prefabricated assembly. For example, the first prefabricated assembly may be a shell part or full shell during the manufacturing of which the first conductive element and the first connector element, as well as at least one or more other prefabricated assemblies may be integrated during manufacturing. In any case, the present solution allows the prefabrication of the at least first and second prefabricated assembles and the establishing of the electrical connection after the first and second prefabricated assemblies have been integrated in and/or form a shell of the rotor blade.

It is however preferred that the lightning protection assembly comprises at least two prefabricated assemblies that are integrated into a shell of a rotor blade (e.g., stacked in the shell during manufacturing of the shell).

In an embodiment, the electrical connection between the first and second connector elements is established by using a bolted connection, wherein preferably the conductor comprises a bolt. By using a bolted connection, a reliable way to establish an electrical connection between the first and second connector elements may be obtained. The bolt may be made of conducting material, e.g. steel or aluminum alloy. A bolted connection may provide a reduced electrical resistance due to tight contact and increased contact area and may further secure the conductor fixedly in place.

The conductor may be received in a hole of the respective connector element. When the electrical connection is established by using the bolted connection, there may be a threaded connection between the conductor and the respective connector element. By using a hole of the respective connector element, it may be possible to safely secure the conductor in the respective connector element. The hole may be provided through an outer surface of the respective prefabricated assembly into the respective connector element, for example after curing the matrix material.

The shell of the rotor blade may be formed by using preformed components. The shell of the rotor blades may comprise glass fiber and/or carbon fiber, in particular pultruded carbon fiber planks.

In an example, the first and second conductive elements may form part of a lightning conductor, in particular a down conductor. As the conductive elements form part of the lightning conductor, they may provide a path for lightning current to travel down the blade and into the grounding system. This may ensure that the lightning strike and the resulting current is safely conducted in the rotor blade, reducing the risk of damage. The first and second conductive elements may for example provide parallel sections of a down conductor; this may increase the current carrying capacity.

Although the first and second conductive elements may form part of a lighting protection system, they may in other applications serve a different purpose; they may for example transport a measurement or control signal or may transport electrical power for driving a component.

A prefabricated assembly may comprise two or more conductive elements, each with a respective connector element, one of which may be part of a lighting protection system and another of which may be used for a different purpose, e.g. as mentioned above.

In an embodiment, the conductor is a lightning receptor, wherein the lightning receptor comprises a receptor head configured to be arranged on an outer surface of the shell of the rotor blade, wherein the receptor head is configured to receive a lightning strike. By capturing the lightning strike at the receptor head, it may be ensured that the energy is safely diverted through the respective conductive elements, rather than allowing it to directly attach to the structure of the rotor blade, for example to carbon fiber structures within the rotor blade, e.g. within one to both prefabricated assemblies. Consequently, this may help to prevent damage to materials of the rotor blade. The conductor may thus fulfil two functions: it may provide a lightning receptor, and it may provide the electrical connection between the first connector element and the second connector element of the prefabricated assemblies. The lightning receptor may comprise a respective bolt section that extends from the receptor head and by which the lightning receptor can be inserted, e.g. screwed, into the first connector element and the second connector element. The lightning receptor may be formed as a single integral piece or be composed of two parts, e.g. the receptor head and the bolt section.

In an example, the receptor head configured to be provided on an outer surface of the shell, wherein the receptor head is spaced apart from the first and second connector elements, wherein a part of the shell (e.g. an outer laminate layer of the shell) may be arranged between the connector head and the first or second prefabricated assembly. If the first prefabricated assembly is arranged outermost in the blade, the outer shell laminate layer may be arranged between the head and the first prefabricated assembly. Thus, the receptor head may be exposed outside the shell in the assembled state of the shell. A transfer of the electric energy of a lightning strike from the receptor head to other parts of the prefabricated assemblies may be avoided.

The conductor may thus be lightning receptor screwed from the outside into a hole through the outer shell and into the first and second connector elements.

In other implementations, the conductor may be inserted from inside, e.g. through an inner layer of the shell; it may not comprise a receptor head.

The lightning protection assembly may comprise any combination of such types of conductors, e.g. a bolt inserted from outside, a lightning receptor inserted from outside, or a bolt inserted from the inside of the blade shell.

In an embodiment, the or each conductive element may extend along a longitudinal extension of the respective prefabricated assembly and/or the or each conductive element may extend along the entire longitudinal extension of the respective prefabricated assembly. By a conductive element that extends along the length of the prefabricated assembly, it may be ensured that the energy of a lightning strike is efficiently transported through the prefabricated assembly. By providing a conducting element that extends along the entire length of the prefabricated assembly, a continuous conductive path may be established. This may allow the lightning strike to be conducted efficiently to the grounding system, which may reduce the chances of localized overheating or damage to specific areas of the blade.

In an embodiment, a size of the first connector element in a direction perpendicular to the conductor is different from the size of the second connector element in the direction perpendicular to the conductor.

For example, the conductor is insertable into the connector elements in an insertion direction, wherein the size of the connector elements in the direction perpendicular to the conductor increases in the insertion direction. By such increase in size, the alignment between the connector element of the first prefabricated assembly and the connector element of the second prefabricated assembly may be facilitated. In particular, when drilling a hole through the first and second prefabricated assemblies for insertion of the conductor, the different sizing may ensure that even if a small misalignment is present, the hole will still extend through both the first and second connector elements. The direction from which such hole is drilled generally corresponds to the insertion direction of the conductor for establishing the electrical connection.

In an example, the connective element comprises a cylindrical, elliptical cylinder-like, a cuboid-like or a prism-like shape. Consequently, it may be possible to use a shape of the connector element that can be adapted to the desired application.

In an embodiment, the first and second connector elements have a cylinder-like shape and wherein preferably, the first connector element comprises a diameter that differs by 0.5-4 cm, preferably 1-3 cm, more preferably 1.5-2.5 cm from the diameter of the second connector element.

In an example, an end face of the cylindrical shape is perpendicular to the conductor.

In an embodiment, the conductor comprises a bolt with a self-tapping thread, wherein the electrical connection comprises a first threaded connection between the threaded bolt and a thread in the first connector element formed or cut by the threaded bolt and a second threaded connection between the threaded bolt and a thread in the second connector element formed or cut by the threaded bolt.

By using a conductor that comprises a bolt with a self-tapping thread, it may be possible to assemble the conductor without pre-drilling a hole, as the self-tapping thread can drill its own hole as it is screwed into the material. In other configurations, a hole may be pre-drilled and the self-tapping thread may cut or form a thread in the pre-drilled hole. In either case, self-tapping the thread may form a strong mechanical bond directly with the material. This may result in a tighter, more secure mechanical connection, and further in a reduced electrical resistance/improved conductivity. The bolt may for example be thread cutting or thread forming.

The self-tapping may be installed without a pre-drilling hole that is provided on the respective connector element. Preferably, a pre-drilling hole is drilled before conductor comprising the bolt with the self-tapping thread is installed. A more precise installation may be possible in the latter case.

In an embodiment, the first connector element provides an end stop for the conductor, or wherein the second connector element provides an end stop for the conductor. Providing an end stop may mean that the conductor does not reach all the way through the respective connector element, e.g. is not exposed from the connector element at the end stop.

The end stop may be provided by drilling a hole for insertion of the conductor not all the way through the last connector element (in insertion direction of the conductor) that is to be connected by the conductor. Such connector element may provide an anchoring point for the connector, e.g. for a lightning receptor.

By providing an end stop on the first or second connector element may prevent that the conductor is being driven too deep when establishing the bolted connection, which may lead to an over-tightening of the conductor. Such over-tightening may strip the threads, damage the material (e.g. the outer shell), or cause deformation of the surrounding area. Furthermore, such an end stop may limit how far the conductor may penetrate the last prefabricated assembly in insertion direction of the conductor. Particularly, it may ensure that the conductor does not go beyond the optimal engagement depth. This may protect the conductor from becoming exposed at its end, which may prevent corrosion or unwanted electrical contacts, and may further avoid that the end of the conductor is sticking out of the respective prefabricated assembly.

In an embodiment, the first and/or second conductive element comprises a cable, a metallic mesh, a conductive foil, or a braided conductor.

The first and/or second conductive element may also comprise a solid metallic conductor or a
a large number of individual wires, for example in the form of a braided hose. The first and/or second conductive element may comprise copper or aluminum alloy.

Preferably, the connector element is a metal block. Other configurations are conceivable. For example, the first and/or second conductive element may comprise a coarse conductive mesh and the first and/or second connector element may comprise a fine mesh.

At least one of the first and second assemblies may contain a structural reinforcement element. The structural reinforcement element may for example comprise a carbon structure made of carbon fiber composite material, for example a part of a carbon fiber spar cap.

At least one of the assemblies may contain at least one additional connector element. Such additional connector element may for example be connected to a further connector element of the other prefabricated assembly, e.g. to connect both conductive elements in parallel.

Furthermore, one or more further prefabricated assemblies may be provided. The one or more further assemblies may each comprise a respective connector element and conductive element connected thereto. The connector element of the first or second prefabricated assembly may be connected to the connector element of the further assembly by a respective conductor, e.g. a bolt. The conductive elements of the thereby connected prefabricated assemblies may thereby be electrically connected in series. Thus, it may be possible to provide a plurality of prefabricated assemblies, which may be connected to each other by connecting the respective connector elements by using one or more conductors. As a result, the conductive path, e.g. of a down conductor of the lighting protection system, may be configured in any desired way.

The first and/or second prefabricated assembly may be a precast piece, which may for example be configured for integration into a rotor blade. It is also conceivable that the first and/or second prefabricated assembly is at least a part of a shell of the rotor blade, e.g. a half shell, or the like. For example, the first and second prefabricated assemblies may form a full shell of the rotor blade, or additional prefabricated assemblies and/or other components may be comprised to form the full shell of the rotor blade. The disclosed solution may be used to connect the conductive elements of respective precast pieces, to connect the conductive elements of a precast piece and a shell part, and/or to connect the conductive elements of different shell parts.

According to a further aspect of the invention, a rotor blade shell or shell part comprising a lighting protection assembly having any configurations described herein is provided. Two or more of the prefabricated assemblies may be stacked to form at least part of a shell. The stacking may occur optionally such that the first prefabricated assembly is closer to an outer surface of the shell and the second prefabricated assembly is closer to an inner surface of the shell. One, two, or more further prefabricated assemblies may optionally by arranged in the stack between the first and second prefabricated assemblies. For example, two or more of the prefabricated assemblies may be stacked in a shell or shell part, or at least one of the prefabricated assemblies may form a part of the shell (e.g. half shell) or even a full shell into which the other prefabricated assembly is integrated (e.g. stacked), or at least two prefabricated assemblies may form shell parts that are mounted to each other or stacked, for example to form a full shell (e.g. two half shells mounted to one another). The conductor may extend from the first connector element to the second connector element, preferably in a direction substantially perpendicular to the outer surface of the shell or shell part. For example, the first and second prefabricated assemblies may be arranged such that the first and second connector elements are aligned so that the conductor can extend from the first connector element to the second connection element.

Accordingly, it may be possible to further arrange one, two or more prefabricated assemblies between the first and second prefabricated assemblies. As a result, shell of the rotor blade may be built up from plural prefabricated assemblies which may already include component of the lighting protection system. Consequently, this may facilitate and accelerate manufacturing of the blade shell and may lead to a better integration of the lightning protection assembly into the design of the rotor blade.

In an example, each of the optionally arranged further prefabricated assemblies may comprise a conductive element and a connector element that is in electrical contact with or formed by the conductive element. The conductive element and the connector element may be embedded in the matrix material of the respective optionally arranged prefabricated assembly. The conductor may be configured to reach through the connector element of one or more, e.g. each, of these further prefabricated assemblies to provide an electrical connection thereto. Consequently, the respective connector element of the optional further prefabricated assemblies may be connected via the (same) conductor. In particular, the conductor may provide a threaded connection; it may be a bolt with a regular or self-tapping thread that may connect the connector elements of the stacked prefabricated assemblies.

In an example, the shell of the rotor blade may comprise a half shell. In particular, the half shell may be manufactured by using a butterfly mold, wherein the butterfly mold may comprise a suction side mold and a pressure side mold. Two half shells may thus be formed which may later be combined into a full shell. The two or more prefabricated assemblies may be stacked in a respective mold when manufacturing the half shell.

Alternatively, the prefabricated assemblies may form part of a full shell. In particular, the full shell may be manufactured by using an integral mold with which the entire shell structure of the wind turbine blade, including its internal and external features, is molded as a single unit.

After manufacturing of the shell or shell part, the at least first and second prefabricated assemblies may be integrated in the shell or shell part and may in particular be embedded in a matrix material (e.g. resin infused by vacuum infusion) of the shell or shell part. Such embedding, which may include curing of the matrix material, may occur prior to establishing the electrical connection via the conductor.

According to a further aspect of the invention, a rotor blade of a wind turbine comprising a lightning protection assembly according to any of the embodiments described herein is provided.

The lighting protection assembly may be a first lightning protection assembly arranged on a suction side of the rotor blade and the rotor blade may further comprise a second lightning protection assembly according to any of the embodiments described herein arranged on a pressure side of the rotor blade.

In an example, the conductor may be a lightning receptor, which may be positioned in the tip region or in the mid-span region of the rotor blade. At such positions, lightning strikes are most likely to occur. By providing the lightning receptor, it is ensured that the lightning energy is captured by the lightning protection system rather than risking it hitting other more vulnerable parts of the rotor blade, such as a conductive carbon structure within the blade.

According to a further aspect, a method for producing a lightning protection assembly of a rotor blade of a wind turbine is provided. The method comprises providing (or manufacturing) a first prefabricated assembly comprising a first conductive element and a first connector element that is in electrical contact with or formed by the first conductive element, wherein the first conductive element and the first connector element are embedded in a matrix material of the first prefabricated assembly, and providing (or manufacturing) a second prefabricated assembly comprising a second conductive element and a connector element that is in electrical contact with or formed by the second conductive element, wherein the second conductive element and the second connector element are embedded in a matrix material of the second prefabricated assembly. The method further comprises manufacturing at least part of a shell of a rotor blade using at least the first and second prefabricated assemblies, wherein the at least first and second prefabricated assemblies are arranged (e.g. stacked or mounted) such that the first connector element and the second connector element are arranged on top of one another (e.g. in the stacking direction or insertion direction of the conductor); and establishing an electrical connection between the first connector element and the second connector element by inserting a conductor that reaches through the first and second prefabricated assemblies at least from the first connector element to the second connector element.

In an embodiment, the method further comprises drilling a hole into the first and second connector elements and inserting the conductor into the hole drilled into the first and second connector elements. By using a hole of the respective connector element, it may be possible to safely secure the conductor in the respective connector element. Furthermore, the precise positioning of the conductor may be ensured, which may contribute to the overall assembly accuracy.

In an embodiment, the conductor is a bolt with a self-tapping thread, wherein the self-tapping thread is tapped into a drilled hole provided in the first and/or second connector element or wherein the self-tapping thread drills itself a hole into the first and/or second connector element to establish the electrical connection.

The method may be performed so as to assemble a lightning protection assembly having any of the configurations disclosed herein. The method may comprise any of the assembly steps disclosed herein. Likewise, the lightning protection assembly may have any of the configurations resulting from the performing of any of the assembly methods disclosed herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a flow diagram illustrating the manufacturing of at least part of a rotor blade comprising a lightning protection assembly according to an embodiment.
Fig. 2 is a schematic drawing showing a first prefabricated assembly of a lightning protection assembly for a rotor blade of a wind turbine according to an embodiment.
Fig. 3 is a schematic drawing showing two prefabricated assemblies of the lightning protection assembly of Fig. 1.
Fig. 4 is a schematic drawing showing the insertion of a conductor in the lightning protection assembly of Fig. 3.
Fig. 5 is a schematic drawing showing an alternative configuration of a lightning protection assembly for a rotor blade of a wind turbine according to an embodiment.
Fig. 6 is a schematic drawing illustrating a lightning protection assembly assembled to a rotor blade of a wind turbine according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

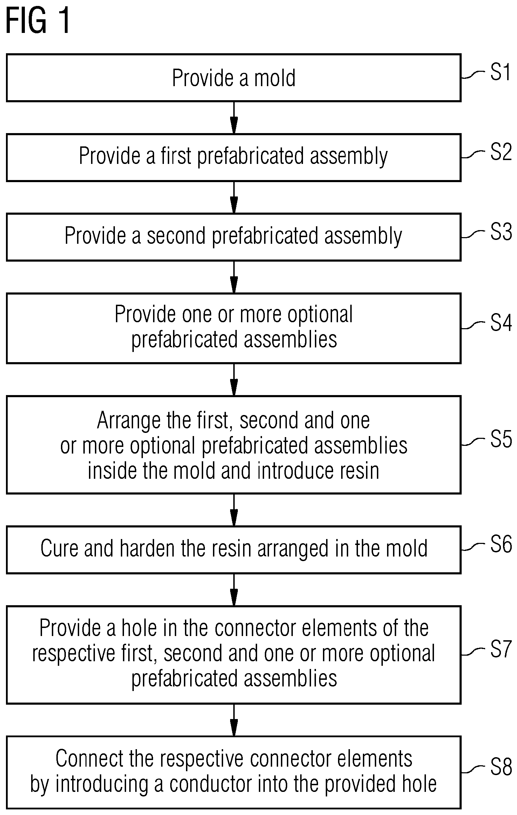

Fig. 1 shows a flow diagram illustrating the manufacturing of at least part of the rotor blade comprising a lighting protection assembly 1.

In a first step S1, a mold for manufacturing a shell or shell part of a rotor blade of a wind turbine may be provided. The shell of the rotor blade may comprise a half shell. In particular, the half shell may be manufactured by using a butterfly mold, wherein the butterfly mold may comprise a suction side mold and a pressure side mold. Two half shells may thus be formed which may later be combined into a full shell. The two or more prefabricated assemblies may be stacked in a respective mold when manufacturing the half shell. Alternatively, the prefabricated assemblies may form part of a full shell. In particular, the full shell may be manufactured by using an integral mold with which the entire shell structure of the wind turbine blade, including its internal and external features, is molded as a single unit.

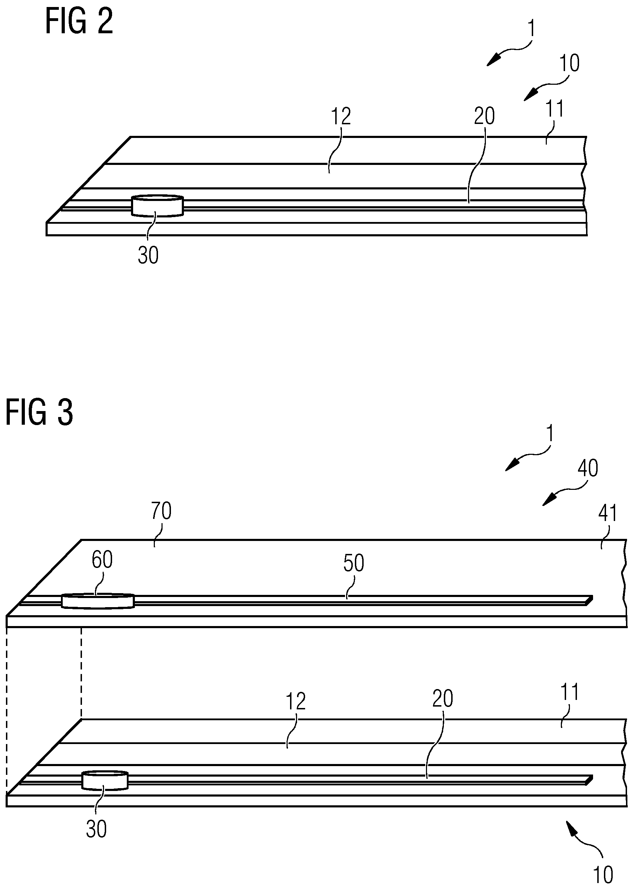

In a second step, a first prefabricated assembly 10 is provided. Such a first prefabricated assembly 10 is shown in Fig. 2. The first prefabricated assembly 10 comprises a first conductive element 20. In the example of Fig. 2. the first conductive element 20 comprises a cable that forms part of a down-conductor of a lightning protection system of the rotor blade. The first prefabricated assembly 10 further comprises a first connector element 30, which in the present example comprises a cylindrical shape. The first connector element 30 is electrically connected to the first conductive element 20. In the example of Fig. 2, the first conductive element 20 further comprises a structural reinforcement element 12, which may be formed of carbon fiber composite material; it may for example form part of a spar cap of the rotor blade when assembled in the shell. It may be abbreviated herein as carbon cap. The structural reinforcement element 12 is optional; it may be present in some prefabricated assemblies and absent in others, depending on where they are used in the blade.

All of the aforementioned components are embedded in a matrix material 11 that comprises non-conductive material. The prefabricated assembly may be manufactured by a lay-up process using an own mold. The elements may be laid up together with, e.g., glass fiber fabrics or sheets. A vacuum infusion process may be used to infuse the matrix material, e.g. a polymer material such as a resin. The prefabricated assembly may then be cured. It may thus form a precast piece that can be integrated into a wind turbine rotor blade, which significantly facilitates the manufacturing thereof.

Returning to Fig.1, in a third step S3, a second prefabricated assembly 40 is provided. Such a second prefabricated assembly can be seen in Fig.3. The second prefabricated assembly 40 may comprise a second conductive element 50, which comprises, similarly to the first conductive element 10, a cable that forms part of a down-conductor of a lightning protection system of the rotor blade. The second prefabricated assembly 40 further comprises a second connector element 60. The second connector element 60 is electrically connected to the second conductive element 50. Similarly to the first connector element 30, the second connector element 60 comprises a cylindrical shape. However, as can be seen from Fig. 3, the size and/or diameter of the connector elements 30, 60 may be different. In the present example of Fig. 3, the diameter of the second connector element 60 is larger than the diameter of the first connector element 30. Furthermore, the thickness of the second connector element 60 is smaller than the thickness of the first connector element 30. It may be also possible to provide the first and/or second connector elements 30, 60 with another shape, e.g. a prism-like or a cubic shape. Accordingly, the first and second connector elements 30, 60 may be provided with a shape chosen according to the respective application and geometry. The components of the second prefabricated assembly 40 are embedded in a matrix material 41, which comprises non-conductive material. In contrast to the first prefabricated assembly 10, the second prefabricated assembly 40 of the present example does not comprise a structural reinforcement element 12. Alternatively, it may be also possible that the second prefabricated assembly 40 also comprises a structural reinforcement element 12. The second prefabricated assembly may be manufactured in a similar way as the first prefabricated assembly. In Fig. 3 the first and second conductive element 20, 50 extends only along a certain range of the longitudinal extension of the respective first or second prefabricated assembly 10, 40. Alternatively, it may be also possible, that the first and/or second conductive element 20, 50 extend along the entire longitudinal extension of the respective first or second prefabricated assembly 10, 40.

Returning to Fig. 1, in optional step S4, one or more optional prefabricated assemblies can be provided. The one or more optional prefabricated assemblies may also comprise a connector element and/or a conductive element. Alternatively, they may not comprise a connector element or a conductive element.

In the next step S5, the first, second and one or more optional prefabricated assemblies are arranged in the mold. It should be clear that the mold may comprise further components for manufacturing the shell part, such as layers of, e.g., glass fiber material (mats, sheets, rovings etc.) forming inner and outer skins of the shell and the like. Preferably, a vacuum infusion method is used for manufacturing the shell part. Accordingly, the mold is sealed with a vacuum bag or other closure. This vacuum bag is then connected to a vacuum pump, which is used to create a vacuum environment inside the mold. Subsequently, resin is introduced into the mold, filling all the gaps between the respective components.

In a next step S6, the resin is cured and hardened, bonding the fibers and core material together into a solid, rigid structure. The curing time and temperature depend on the type of resin and the design specifications of the rotor blade.

Thereby the first and second prefabricated assemblies are integrated into the structure of the rotor blade. In particular, they may form part of the shell structure, they may for example from the spar cap of the rotor blade by respective structural reinforcement elements 12. By such method, it is therefore not necessary to lay up the individual conductive elements, structural reinforcement elements and the like in the mold of the shell part, which is labor-intensive and time consuming and requires a precise alignment in the large mold, but it is sufficient to stack the prefabricated assemblies in the mold. The time and effort required to manufacture the shell part (or whole shell in case of an integral mold) may thus be reduced significantly.

In a next step S7, a hole is provided in the connector elements of the first, second and one or more optional prefabricated assemblies, if present. The respective hole may be provided by drilling, laser cutting, or water jet cutting. The hole may be provided from the outer surface of the blade shell (it may thus penetrate an outer blade skin) or may be provided from an inner surface of the blade shell (surface of shell facing inwards).

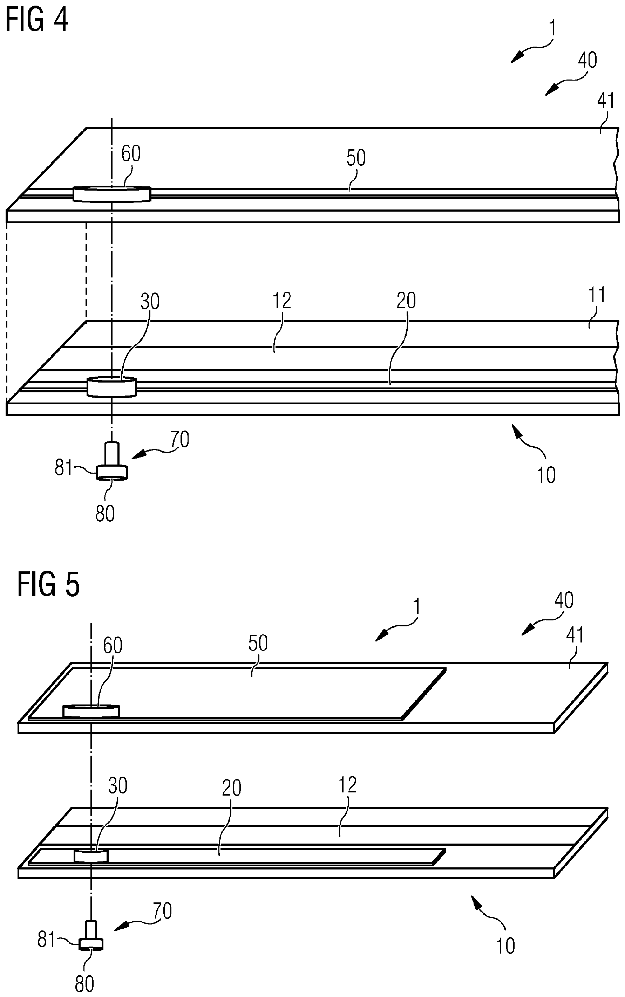

In step S8 the respective connector elements 30, 60 of the first and second prefabricated assemblies 10, 40, and one or more optional prefabricated assemblies if provided, are connected by a conductor 70 that is introduced into the hole provided in the respective connector elements 30, 60. This is shown in an exploded view in Fig. 4 in which the conductor 70 comprises a bolt, optionally with a self-tapping thread. By introducing a conductor that comprises a bolt with a self-tapping thread, the thread may form a strong mechanical bond directly with the material. This may result in a tighter, more secure connection with improved electrical contact.

Furthermore, the conductor 70 of the example of Fig. 4 is a lightning receptor 80. As can be seen in Fig. 4, the lightning receptor 80 comprises a receptor head 81 that is configured to be arranged on the outer shell of the rotor blade. The receptor head 81 is configured to capture a lightning strike. Preferably, the connector element 60 of the second prefabricated assembly 40 may comprise an end stop for the conductor 70. An end stop may be provided by in a connector element by stopping the drilling of the hole in the connector element before fully drilling through. When screwing-in the conductor 70, the conductor may stop when reaching the bottom of the hole. As a result, the end of the conductor 70 does not protrude out of the connector element and through the second prefabricated assembly. This may ensure that the metal of the conductor 70 is not exposed, which may help to prevent corrosion.

In Fig. 5, an alternative configuration is shown in which the first and/or second conductive element 20, 50 comprises a metallic mesh. It may be also possible that the first and/or second conductive element 20, 50 comprises a braided conductor. The first and/or second conductive element 20, 50 may also comprise a solid metallic conductor or a large number of individual wires, for example in the form of a braided hose. The first and/or second conductive element 20, 50 may be made of copper or an aluminum alloy.

As shown in connection with Fig. 5, the first and second conductive elements 20, 50 are designed as individual components. Alternatively, the first conductive element 20 and the first connector element 30 and/or the second conductive element 50 and the second connector element 60 may be formed integrally, they may be formed as a single piece. For example, the one-piece component may comprise a coarse mesh that defines the respective first/and or second conductive element 20, 50 and a fine mesh to define the respective first/and or second connective element 30, 60.

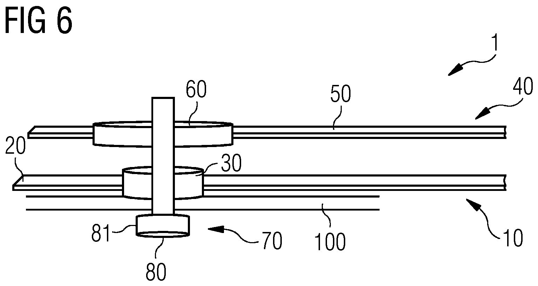

Fig. 6 shows a lightning protection assembly 1 that has been formed from two prefabricated assemblies the connector elements of which are electrically connected by the conductor 70. The lighting protection assembly 1 may be integrated in a shell of a rotor blade by the method described with respect to figure 1. The hole drilled for insertion of conductor 70 reaches through the shell laminate 100. The receptor head 81 of the receptor 80 is arranged at the outer surface of the shell. The receptor head 81 may attract lightning strikes so that the lighting does not hit other (vulnerable) parts of the blade, such as the structural reinforcement element 12 of the carbon fiber spar cap formed from respective elements. Shell laminate 100 that comprises the outer surface of the shell may be present between the receptor head 81 and the prefabricated assembly 10, in particular the first connector element 30.

In case a lightning strikes the receptor head 81, the electric energy is conducted via the receptor 80 to the first connective element 30 and subsequently to the second connective element 60. This electric energy may then be conducted via the respective first and second conductive elements 20, 50 to the down-conductor of the lightning protection system of the wind turbine.

In other implementations, the conductor 70 may not be a lighting receptor, but may be a bolt inserted from the inner surface of the shell. An electrical connection may thus be established that is not exposed to the outside of the shell, which may prevent corrosion of the conductor 70.

Although not shown, it should be clear that some prefabricated assemblies may comprise further connector elements, at which an electrical connection to a conductive element of a further prefabricated assembly may be established and/or a further lightning receptor may be provided. Depending on the arrangement by using respective connector elements and conductors, the conductive elements of plural prefabricated assemblies may thus be electrically connected in series and/or in parallel, for example to provide a down conductor having a desired current carrying capacity.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A lightning protection assembly for a rotor blade of a wind turbine, comprising at least:
- a first prefabricated assembly (10) comprising a first conductive element (20) and a first connector element (30) that is in electrical contact with or formed by the first conductive element (20), wherein the first conductive element (20) and the first connector element (30) are embedded in a matrix material (11) of the first prefabricated assembly (10), and
- a second prefabricated assembly (40) comprising a second conductive element (50) and a connector element (60) that is in electrical contact with or formed by the second conductive element (50), wherein the second conductive element (50) and the second connector element (60) are embedded in a matrix material (41) of the second prefabricated assembly (40),
wherein the first and second prefabricated assemblies (10, 40) are configured to form at least part of a shell of the rotor blade,
wherein the lightning protection assembly (1) further comprises an electrical connection between the first connector element (30) and the second connector element (60), wherein the electrical connection comprises a conductor (70) that extends through the first and second prefabricated assemblies (10,40) at least from the first connector element (30) to the second connector element (60).

2. The lightning protection assembly according to claim 1, wherein the electrical connection between the first and second connector elements (30, 60) is established by using a bolted connection, wherein preferably the conductor (70) comprises a bolt.

3. The lightning protection assembly according to claim 1 or 2, wherein the conductor (70) is a lightning receptor (80), wherein the lightning receptor (80) comprises a receptor head (81) configured to be arranged on an outer surface of the shell of the rotor blade, wherein the receptor head (81) is configured to receive a lightning strike.

4. The lightning protection assembly according to any of the preceding claims, wherein the first and/or second conductive element (20, 50) extends along a longitudinal extension of the respective first or second prefabricated assembly (10, 40) or wherein first and/or second conductive element (20, 50) extends along the entire longitudinal extension of the respective first or second prefabricated assembly (10, 40).

5. The lightning protection assembly according to any of the preceding claims, wherein a size of the first connector element (30) in a direction perpendicular to the conductor (70) is different from the size of the second connector element (30) in the direction perpendicular to the conductor (70).

6. The lightning protection assembly according to any of the preceding claims, wherein the conductor (70) is insertable into the connector elements in an insertion direction, wherein the size of the connector elements (30, 60) in the direction perpendicular to the conductor (70) increases in the insertion direction.

7. The lightning protection assembly according to any of the preceding claims, wherein the first and second connector elements (30, 60) have a cylinder-like shape and wherein preferably, the first connector element (30) comprises a diameter that differs by 0.5-4 cm, preferably 1-3 cm, more preferably 1.5-2.5 cm from the diameter of the second connector element (60).

8. The lightning protection assembly according to any of the preceding claims, wherein the conductor (70) comprises a bolt with a self-tapping thread, wherein the electrical connection comprises a first threaded connection between the threaded bolt and a thread in the first connector element (30) formed or cut by the threaded bolt and a second threaded connection between the threaded bolt and a thread in the second connector element (60) formed or cut by the threaded bolt.

9. The lightning protection assembly according to claim 7, wherein the first connector element (30) provides an end stop for the conductor (70), or wherein the second connector element (60) provides an end stop for the conductor.

10. The lightning protection assembly according to any of the preceding claims, wherein the first and/or second conductive element (30, 60) comprises a cable, a metallic mesh, a conductive foil, or a braided conductor.

11. A rotor blade shell or shell part comprising a lighting protection assembly (1) according to any of the preceding claims, wherein two or more of the prefabricated assemblies are stacked in the shell or shell part such that the first prefabricated assembly (10) is closer to an outer surface of the shell and the second prefabricated assembly (40) is closer to an inner surface of the shell, or wherein at least one of the at least first and second prefabricated assemblies forms a shell or shell part and another of the at least first and second prefabricated assemblies is integrated into the shell or shell part, or is mounted to the shell or shell part, and wherein the conductor (70) extends from the first connector element (30) to the second connection element (60), preferably in a direction substantially perpendicular to the outer surface of the shell or shell part.

12. A rotor blade of a wind turbine comprising a lightning protection assembly according to any of claims 1 - 10 or a rotor blade shell or shell part according to claim 11.

13. A method for producing a lightning protection assembly (1) of a rotor blade of a wind turbine, wherein the method comprises:
- providing a first prefabricated assembly (10) comprising a first conductive element (20) and a first connector element (30) that is in electrical contact with or formed by the first conductive element (20), wherein the first conductive element (20) and the first connector element (30) are embedded in a matrix material (11) of the first prefabricated assembly (10), and
- providing a second prefabricated assembly (40) comprising a second conductive element (50) and a connector element (60) that is in electrical contact with or formed by the second conductive element (50), wherein the second conductive element (50) and the second connector element (60) are embedded in a matrix material (41) of the second prefabricated assembly (40),
- manufacturing at least part of a shell of a rotor blade using at least the first and second prefabricated assemblies (10, 40), wherein the at least first and second prefabricated assemblies (10, 40) are arranged such that the first connector element (20) and the second connector element (50) are positioned on top of one another; and
- establishing an electrical connection between the first connector element (20) and the second connector element (50) by inserting a conductor (70) that reaches through the first and second prefabricated assemblies (10, 40) at least from the first connector element (30) to the second connector element (60).

14. The method according to claim 13, wherein the method further comprises:
- drilling a hole into the first and second connector elements (30, 60),
- inserting the conductor (70) into the hole drilled into the first and second connector elements (30, 60).

15. The method according to claim 13 or 14, wherein the conductor (70) is a bolt with a self-tapping thread, wherein the self-tapping thread is tapped into a drilled hole provided in the first and/or second connector element (30, 60) or wherein the self-tapping thread drills itself a hole into the first and/or second connector element (30, 60) to establish the electrical connection.
